Europäisches Patentamt

European Patent Office

Office européen des brevets

(11) Publication number: **0 325 986**
**A2**

(12) **EUROPEAN PATENT APPLICATION**

(21) Application number: **89100684.3**

(51) Int. Cl.4: **A23J 3/00**

(22) Date of filing: **17.01.89**

(30) Priority: **28.01.88 US 149496**

(43) Date of publication of application:
**02.08.89 Bulletin 89/31**

(84) Designated Contracting States:
**DE ES FR GB IT**

(71) Applicant: **MILES INC.**
**1127 Myrtle Street**
**Elkhart,IN 46515(US)**

(72) Inventor: **Faigh, Jilane G.**
**56643 Old Orchard Lane**
**Elkhart, IN 46516(US)**
Inventor: **Stuart, Mark J.**
**69124 Kessington Road**
**Union, MI 49130(US)**
Inventor: **Talbott, Larry L.**
**51723 Northfield Drive**
**Elkhart, IN 46514(US)**

(74) Representative: **Dänner, Klaus, Dr. et al**
**c/o Bayer AG Konzernverwaltung RP**
**Patentabteilung**
**D-5090 Leverkusen 1 Bayerwerk(DE)**

(54) **Enzymatic hydrolysis of proteins.**

(57) Disclosed is a novel method for the hydrolysis of foodgrade proteins. The method involves contacting an aqueous suspension of the protein with a combination of protease from a fungus of the species *Aspergillus oryzae* and an enzymatic extract of porcine pancreas. The method is particularly suitable for the hydrolysis of soy protein isolates without causing bitter off flavors to develop.

EP 0 325 986 A2

## ENZYMATIC HYDROLYSIS OF PROTEINS

### Background of the Invention

Food grade protein hydrolysates have at least two primary applications in the food industry. First of all, there is a need for hydrolyzed proteins as a component in infant formula. Secondly, hydrolyzed proteins provide a nutritional supplement for those individuals who do not have the proper digestive capability. It is known that proteins can be degraded into polypeptides of suitable length and free amino acids by enzymatic hydrolysis. However, this typically results in end products which have a bitter taste.

Among the prior art references which disclose the enzymatic hydrolysis is U.S. patent 3,970,520 to Feldman et al who disclose a process for preparing a hydrolyzed, proteinaceous material which involves combining an aqueous solution of a protein isolate with a proteolytic enzyme mixture of ficin, papain and neutral protease from *B. subtilis.*

In U.S. patent 4,228,241 Hiraga et al disclose culturing a filamentous fungus of the species *Aspergillus oryzae* or *A. soyae* to provide a peptidase preparation which is capable of hydrolyzing protein almost completely to its constituent amino acids.

R. C. Jolly in U.S. patent 4,107,334 discloses thermally denaturing an impure natural protein and then subjecting the natural protein to enzymatic proteolysis preferably using a proteolytic enzyme derived from *B. subtilis* or *B. licheniformis.*

In U.S. patent 3,857,966 Feldman et al disclose a process for producing protein hydrolysates in which a protein is initially heat treated at alkaline pH and then reacted at an alkaline pH with an alkaline microbial protease and then at a neutral pH with a plant enzyme and a neutral microbial protease. In a specific embodiment the patentees disclose *B. subtilis* as the source of the alkaline and neutral protease and papain as a suitable plant enzyme.

Japanese patent 73/001188 discloses the hydrolysis of soy protein by treatment with an acid protease or carboxypeptidase produced by an *Aspergillus* microorganism wherein the hydrolysate is said to be free of offensive odor.

Japanese patent 77/79083 describes the hydrolysis of protein by using a cell homogenate or an enzyme preparation of lactobacillus, pancreatin and a protease from *aspergillus*. The hydrolysate is said to be devoid of bitter taste.

In Japanese patent 71/015653 an enzyme obtained from the pig's pancreas or a lactic acid bacilli cell body is used for treating a casein containing food to remove bitterness therefrom.

Published European patent application 65663 discloses the preparation of protein hydrolysates by treating an aqueous slurry of whey protein containing a low level of lactose with a neutral, fungal, foodgrade protease from *Aspergillus oryzae.*

### Summary of the Invention

The present invention is a method for the hydrolysis of food grade protein. The method comprises contacting an aqueous suspension of the protein with an enzymatic system comprising protease derived from a fungus of the species *Aspergillus oryzae* and an extract of porcine pancreas. The reaction is carried out under conditions suitable and for a time sufficient to cause the desired degree of hydrolysis.

### Description of the Invention

Exemplary of foodgrade proteins which can be degraded by the method of the present invention are casein, fish, chicken, beef, egg, yeast, bean soy, lactoalbumin, sunflower, wheat, corn, peas, barley, cottonseed, rice, rye, oat, peanut and alfalfa. The hydrolysates are useful as non-dairy products, meat analogs, flavorings, pasta, tofu, sauces, soups, baby formulas and beverages. Preparatory to their enzymatic hydrolysis, the proteins are placed in an aqueous suspension. This is typically accomplished by placing the protein to be hydrolyzed in water suspension at the appropriate pH, preferably at a pH either acid or alkaline of its isoelectric point, whichever is more appropriate in a given procedure. The pH of the suspension should, of course, be kept within the functional range of the enzyme system.

Fungal protease from *A. oryzae* is available commercially in the form of liquids or powders such as, for example, Takamine Brand Fungal Protease 31,000. The protease is prepared by fermentation of a suitable strain of *A. oryzae* and isolation of the protein by methods well known to those skilled in this art. The protease is concentrated and then diluted to the desired concentration with an appropriate diluent such as lactose, dextrose, maltodextrin or starch. Liquid diluents such as sorbitol or polypropylene glycol can also be used. Ideally the fungal protease used will contain acid, neutral and alkaline fungal protease activities. These activities are present in most commercial fungal protease preparations, although the ratio will vary from fermentation to fermentation since the activity is standardized for total protease activity. The enzymatic extract of the porcine pancreas is obtained by methods typical of those used to isolate proteins in this industry, i.e. the porcine pancrease is ground, subjected to solvent extraction to remove fats and then suspended in an aqueous medium from which the enzymes are precipitated. This material is available commercially as Milezyme Brand pancreatic lipase 250. The extract contains lipase, amylase and a mixture of proteases. The extract is standardized as to its lipase activity. Accordingly, the amylase and protease activity will vary from extraction to extraction. The ratio of fungal protease to pancreatic extract in terms of protease units should be within the range of 0.9:1 to 1.1:1. A ratio of 1:1± 5% either way is especially suitable using the assay described in U.S. Patent 4,707,364. This is the case due to the need for optimal exo-endo-peptidase-protease considerations.

Typically, the hydrolysis will be carried out at a temperature of from 30° to 50°C and a pH within the range of 4.0 to 9.5 (preferably 6.5 to 7.5) for a time sufficient to achieve the desired degree of protein hydrolysis. If the goal is to break the protein down to its smallest constituent parts while still maintaining a non bitter hydrolysate, the reaction time normally ranges from 8 to 24 hours. The time will be proportionally shorter (2 to 24 hours) when less than complete degradation of the protein is sought.

The protein hydrolysate prepared by the present method is particularly suitable for food use because of its bland (non-bitter) taste.

Example I

Lactalbumin Hydrolysis

A 10% w/v aqueous protein solution was prepared, brought to a temperature of 50°C, and adjusted to a pH of 7.0 to 7.5 with sodium hydroxide. An enzyme composition consisting of Fungal 31,000 and Pancreatic 250 was blended into the slurry at a concentration of 2.45% fungal and 0.65% pancreatic extract. Fungal protease 31,000 is an enzyme system derived from the controlled fermentation of an *A. oryzae* strain. The designation 31,000 refers to its activity per gram as measured by the HU, hemoglobin assay. The protease consists of acid, neutral and alkaline proteases with both exo and endo peptidase activity. The fungal protease is also available as unstandardized concentrate or a standardized powder at 60,000 HU/g. Pancreatic Lipase 250 is an enzyme preparation derived from porcine pancreas. In addition to lipase activity which is directed at triglycerides, it contains amylase and protease activity. The protease activity, which is the most significant is accounted for primarily by trypsin and chymotrypsin. The two proteases were assayed using a standard reaction which causes an increase in absorbance at 660 nm which is equivalent to the release of 0.1μ mole of tyrosine/hr/ml using casein curd and the folin reaction as described in European Patent Application No. (85100267.5). The final activity was determined to be Fungal at 41,423 and Pancreatic 250 at 156,831 Protease Activity Units/g. Accordingly, the enzyme inoculation resulted in a 1:1 ratio fungal:pancreatic based on activity. As recognized in the prior art there are many individual and combination enzyme blends which are stated to be superior in developing low bitterness, high protein hydrolysates. The present method of selecting a desired blend of such proteases involves trying various individual proteases. The products were monitored by absorbance spectroscopy, and were found to have a high degree of hydrolysis while minimizing astringency bitterness. These two enzymes were then re-examined in combination and individually. Again, using the same evaluation procedure over a time period of 0.5, 2.0, 5.0, 8.0 and 24 hours, the best final procedure was selected. This was accomplished by the combination of organoleptic evaluation and hydrolytic ninhydrin assay. The 1:1 ratio is optimal for consistent preparation of a non-bitter hydrolasyte.

The reaction was allowed to proceed for 24 hours without developing any off flavors. Samples were analyzed for both percent digestion and organoleptic evaluation at 0.5, 2.0, 5.0, 8.0 and 24 hours.

Table 1

| Enzyme Designation | %-Quantity* Enzyme Inoculated | Time Incubation Hour | % Digestion | Average ** Organoleptic Scores |
|---|---|---|---|---|
| Control | | 0 | | 0 |
| Control | | 0.5 | | 0 |
| Fungal | 1X | 0.5 | 10.0% | 0.125 |
| Fungal | 2X | 0.5 | 16.6% | 0.125 |
| Pancreatic | 1X | 0.5 | 18.3% | 0.375 |
| Pancreatic | 2X | 0.5 | 22.9% | 0.125 |
| Fungal + Pancreatic | 1X ea. | 0.5 | 23.8% | 0 |
| Control | | 2.0 | | 0 |
| Fungal | 1X | 2.0 | 19.8% | 0.375 |
| Fungal | 2X | 2.0 | 29.3% | 0.250 |
| Pancreatic | 1X | 2.0 | 24.6% | 0.125 |
| Pancreatic | 2X | 2.0 | 34.1% | 0.375 |
| Fungal + Pancreatic | 1X ea. | 2.0 | 37.3% | 0.375 |
| Control | | 5.0 | | 0 |
| Fungal | 1X | 5.0 | 28.0% | 0.625 |
| Fungal | 2X | 5.0 | 40.5% | 0.875 |
| Pancreatic | 1X | 5.0 | 29.9% | 0.250 |
| Pancreatic | 2X | 5.0 | 38.7% | 0.625 |
| Fungal + Pancreatic | 1X ea. | 5.0 | 35.6% | 0.625 |
| Control | | 8.0 | | 0 |
| Fungal | 1X | 8.0 | 32.4% | 1.25 |
| Fungal | 2X | 8.0 | 47.4% | 1.50 |
| Pancreatic | 1X | 8.0 | 37.4% | 0.875 |
| Pancreatic | 2X | 8.0 | 41.1% | 1.25 |
| Fungal + Pancreatic | 1X ea. | 8.0 | 49.8% | 1.00 |
| Control | | 24.0 | | 0 |
| Fungal | 1X | 24.0 | 53.8% | 1.875 |
| Fungal | 2X | 24.0 | 59.2% | 2.125 |
| Pancreatic | 1X | 24.0 | 48.3% | 1.375 |
| Pancreatic | 2X | 24.0 | 50.7% | 1.625 |
| Fungal + Pancreatic | 1X ea. | 24.0 | 64.6% | 1.375 |
| 100% hydrolysis*** | | 24.0 | 100% | |

*    1X = 131,250 PAU/125g of 10% Lactalbumin Slurry.
**   Organoleptic Score:  0 = No Bitterness
                          1 = Slight Bitterness
                          2 = Moderate Bitterness
                          3 = Strong Bitterness

***  100% Acid Hydrolysis As Standard

Referring to table I, it can be seen that the preferred combination of fungal and pancreatic lipase at 1X (each) develops the highest percent digestion at each time interval. This is accomplished while maintaining minimal levels of bitterness. Generally this enzyme combination maintains the best overall scores for each incubation period. After completion of the reaction, heat treatment at 90°C for 10 minutes was used to inactivate the enzymes.

Example II

Soy Protein Isolate Hydrolysis

An 8% w/v solution of soy protein isolate was brought to pH 7 with 25% sodium hydroxide and equilibrated to 50°C.

The fungal protease 31,000 and pancreatic lipase 250 were added at a level of 0.62% and 0.16% respectively based on dry solids. This provided a protease ratio of 1:1.

The reaction was allowed to proceed for three hours whereupon the hydrolysis was stopped by raising the temperature to 90°C and holding for 10 minutes. The hydrolysate was then spray dried to produce the final product. A 10% (w/w) aqueous solution of the soy protein produced had a final viscosity of approximately 20 centipoise as measured on a Brookfield viscometer RVT with a No. 21 spindle at 100 rpm and had a light tan to whitish color. The results of a taste panel demonstrated that the product had a clearly superior flavor profile as compared to competitive products available in the open market.


**Claims**

1. A method for the hydrolysis of foodgrade protein which comprises contacting an aqueous suspension of the protein with an enzymatic hydrolyzing system comprising protease from a fungus of the species *Aspergillus oryzae* and an enzymatic extract of porcine pancreas under conditions suitable and for a time sufficient to cause the desired degree of hydrolysis.

2. The method of claim 1 wherein the protein is derived from casein, fish, beef, egg, yeast, soy bean, lactoalbumin, sunflower, wheat, corn, peas, barley, cottonseed, rice, rye, oat, peanut or alfalfa.

3. The method of claim 1 or 2 wherein the pH during hydrolysis is maintained at a level between 4.0 and 9.5.

4. The method of claims 1 - 3 wherein the ratio of fungal protease to pancreatic extract in terms of protease units is from 0.9:1 to 1.1:1.

5. The method of claim 4 wherein the ratio is 1:1± 5%.

6. The method of claims 1 - 4 wherein the protein hydrolyzed is a soy protein isolate.

7. A method for the hydrolysis of a soy protein hydrolysate which comprises contacting an aqueous solution of a soy protein hydrolysate with an enzymatic hydrolyzing system comprising protease from a fungus of the species *Aspergillus oryzae* and an enzymatic extract of porcine pancreas wherein the ratio of fungal protease to porcine pancrease extract in terms of protease units is 1:1± 5% and wherein the pH of the aqueous solution is maintained at a level of 6.5 to 7.5 for a time sufficient to achieve the desired degree of hydrolysis.